# EUROPÄISCHE PATENTSCHRIFT

(11) **EP 0 552 389 B1**
(45) Veröffentlichungstag und Bekanntmachung des Hinweises auf die Patenterteilung: **10.07.1996**
(21) Anmeldenummer: 92100880.1
(22) Anmeldetag: 20.01.1992
(51) Int. Cl.: B03C 3/68

(54) **Energieversorgungsverfahren für einen Elektrofilter**
Power supply method for an electro-filter
Procédé pour alimenter en énergie un électro-filtre

(43) Veröffentlichungstag der Anmeldung: 28.07.1993
(73) Patentinhaber: SIEMENS AKTIENGESELLSCHAFT, 80333 München (DE)
(72) Erfinder: Grass, Norbert, Dipl.-Ing., W-8501 Feucht (DE); Dönig, Gerhard, Dipl.-Ing., W-8520 Erlangen (DE)

(56) Entgegenhaltungen:
- EP-A- 0 034 075
- EP-A- 0 206 160
- DE-A- 3 813 314
- DE-U- 9 003 125

## Beschreibung

Die vorliegende Erfindung betrifft ein Energieversorgungsverfahren für ein Elektrofilter nach dem Oberbegriff des Anspruchs 1.

Ein derartiges Verfahren ist beispielsweise aus der EP 0 206 160 bekannt.

Das dort beschriebene Verfahren ist insofern noch nicht optimal, als dort ein Kondensator in Reihe zum Hochspannungstransformator geschaltet ist und daher stets nur einzelne Strompulse an den Hochspannungstransformator und von dort weiter an das Elektrofilter übertragbar sind.

Aufgabe der vorliegenden Erfindung ist es, ein Energieversorgungsverfahren für ein Elektrofilter anzugeben, das möglichst einfach, flexibel und sicher ist. Die zugehörige Schaltung soll darüber hinaus möglichst kostenoptimiert sein.

Die Aufgabe wird durch die Merkmal des Anspruchs 1 gelöst.

Wenn abwechselnd nur das eine und nur das andere der Halbleiterventile gesperrt wird, werden die auftretenden Verluste gleichmäßig auf beide Halbleiterventile verteilt.

Wenn der Wechselrichter zum Steuern des Stromes mit einer Frequenz getaktet wird, die mindestens zehnmal so hoch ist wie die Ausgangsfrequenz des Wechselrichters, typisch 50 bis 100 mal so hoch, werden Sättigungserscheinungen im Hochspannungstransformator vermieden. Darüber hinaus beeinflussen sich in diesem Fall die Stromstellerfunktion des Wechselrichters und die Wechselrichterfunktion praktisch nicht mehr.

Wenn bei einem Filterdurchschlag alle Halbleiterventile gesperrt werden, wird der im Hochspannungstransformator fließende Strom schnellstmöglich abgebaut.

Wenn der Wechselrichter spannungsgesteuerte Halbleiterventile, z.B. insulated-gate-Bipolartransistoren, aufweist, kann der Wechselrichter mit einer sehr geringen Steuerleistung angesteuert werden.

Wenn der Gleichrichter zumindest teilweise als gesteuerter Gleichrichter ausgebildet ist, kann der Zwischenkreisumrichter praktisch ohne Verluste mit Energie versorgt werden.

Weitere Vorteile und Einzelheiten ergeben sich aus der nachfolgenden Beschreibung eines Ausführungsbeispiels, anhand der Zeichnungen und in Verbindung mit den weiteren Ansprüchen. Es zeigen:
- FIG 1: einen Zwischenkreisumrichter,
- FIG 2: einen typischen Stromverlauf im Transformator und
- FIG 3 bis FIG 6: die Ansteuerung der Halbleiterventile.

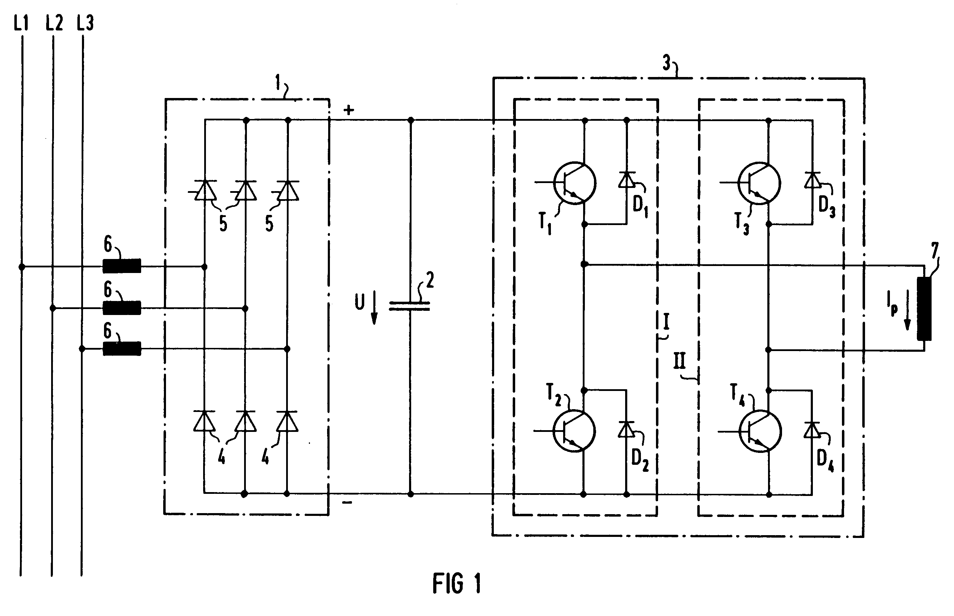

Gemäß FIG 1 besteht der Zwischenkreisumrichter aus dem Gleichrichter 1, dem Zwischenkreiskondensator 2 und dem Wechselrichter 3.

Der Gleichrichter 1 weist in jedem seiner Brückenzweige eine Diode 4 und einen Thyristor 5 auf, ist also ein halbgesteuerter Gleichrichter. Jeder der Brückenzweige des Gleichrichters 1 ist über eine Drosselspule 6 an eine der drei Phasen L1, L2 und L3 eines Drehstromnetzes angeschlossen. Der Anschluß an das Drehstromnetz kann ohne Vorwiderstände und ohne Schütze erfolgen, weil wegen der Steuerbarkeit des Gleichrichters 1 Überströme beim Anfahren des Zwischenkreisumrichters vermieden werden können. Nach dem Anfahren bleiben die Thyristoren durchgeschalten; der Gleichrichter 1 wirkt also während des Betriebs wie ein ungesteuertes Gleichrichter.

Der Zwischenkreiskondensator 2 kann relativ klein dimensioniert werden. Er muß nämlich die Netzwelligkeit nicht ausregulieren, sondern nur kurzfristig den Strombedarf des Wechselrichters 3 decken. Weiterhin muß der Zwischenkreiskondensator 2 in der Lage sein, bei einem Filterdurchschlag sowie beim Umschalten des Wechselrichters 3 kurzzeitig den durch die Primärwicklung 7 des Hochspannungstransformators fließenden Strom Iₚ aufzunehmen.

Der Wechselrichter 3 besteht im wesentlichen aus zwei Brückenzweigen I, II mit je einem plusseitigen schaltbaren Halbleiterventil T₁ bzw. T₃ und je einem minusseitigen schaltbaren Halbleiterventil T₂ bzw. T₄. Jedem der vier Halbleiterventile T₁ bis T₄ ist eine Diode D₁ bis D₄ parallel gegengeschaltet. Die Halbleiterventile T₁ bis T₄ sind im vorliegenden Fall spannungsgesteuerte insulated-gate-Bipolartransistoren, die Ströme bis zu einem kA führen können. Prinzipiell könnten jedoch auch andere Halbleiterventile, z.B. GTOs oder npn-Transistoren verwendet werden.

Die Primärwicklung 7 des im übrigen nicht dargestellten Hochspannungstransformators ist derart an den Wechselrichter 3 angeschlossen, daß der Ausgang des Transistors T₁ über die Primärwicklung 7 mit dem Eingang des Transistors T₄ verbunden ist und damit logischerweise auch der Ausgang des Transistors T₃ über die Primärwicklung 7 mit dem Eingang des Transistors T₂ verbunden ist.

Der Wechselrichter 3 nimmt bei der Schaltung gemäß FIG 1 zwei Funktionen wahr, nämlich außer seiner eigentlichen Wechselrichterfunktion auch die Stromstellerfunktion. Das Wechselrichten geschieht dadurch, daß während einer Halbperiode die Transistoren T₁ und T₄ angesteuert werden, während gleichzeitig die Transistoren T₂ und T₃ gesperrt sind. Während der anderen Halbperiode werden die Transistoren T₁ und T₄ gesperrt, während die Transistoren T₂ und T₃ angesteuert werden. Das Stromstellen geschieht dadurch, daß während der jeweiligen Halbperioden die angesteuerten Transistoren T₁ und T₄ bzw. T₂ und T₃ nicht einfach durchgeschaltet werden, sondern zeitweise gesperrt werden. Vorzugsweise wird dabei nur einer der Transistoren, z.B. der Transistor T₁, gesperrt, während der andere angesteuerte Transistor, z.B. der Transistor T₄, durchgeschaltet bleibt.

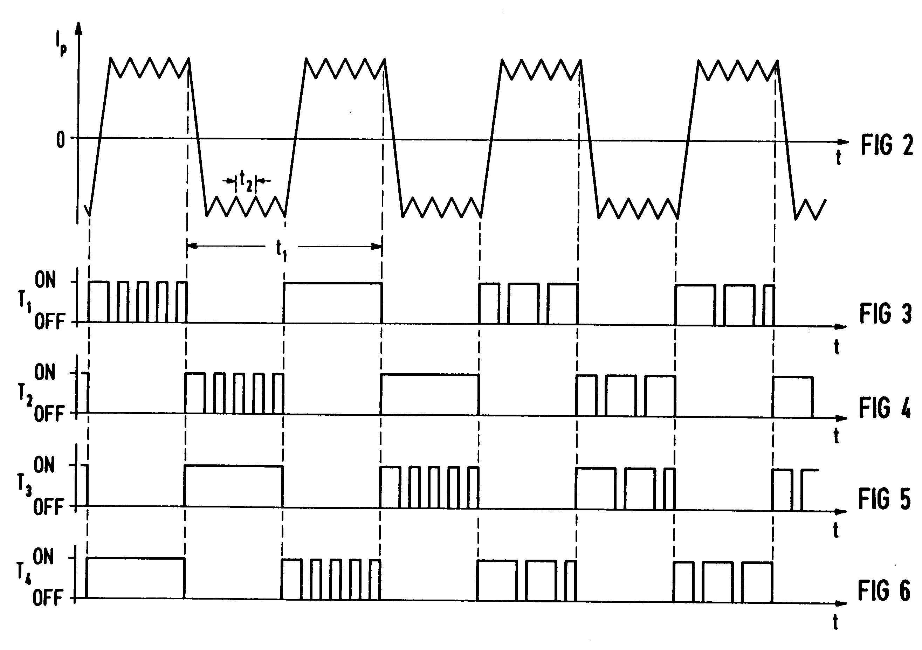

Es ergibt sich damit ein Stromverlauf in der Primärwicklung 7 wie in FIG 2 dargestellt. Die FIG 3 bis 6 zeigen die dazugehörigen Schaltzustände der Transistoren T₁ bis T₄. Die Wechselrichtertaktung erfolgt typisch im Bereich t₁ = 2...20 ms, was einer Frequenz f₁ von 50...500 Hz entspricht. Die Stromregelung, mit der der im Zwischenkreis fließende Strom beeinflußt wird, erfolgt typisch erheblich öfter als das Umschalten des Wechselrichters 3. Die Stromregelung erfolgt üblicherweise im Bereich t₂ = 50...100 µs, was einer Frequenz f₂ von 10... 20 kHz entspricht. Sättigungserscheinungen im Hochspannungstransformator werden dabei vermieden, wenn die Stromstellerfrequenz f₂ erheblich größer ist als die Wechselrichterfrequenz f₁, im Regelfall mindestens 10 mal so groß ist wie die Wechselrichterfrequenz f₁, typisch 50 bis 100 mal so groß. Im Ergebnis ergibt sich nach dem Gleichrichten des in der (nicht dargestellten) Sekundärwicklung induzierten Stromes ein nahezu konstanter Gleichstrom, der nur beim Umschalten des Wechselrichters 3 kurzzeitig absinkt.

Die Stromstellerfunktion kann sowohl in Form einer Zweipunkt-Regelung als auch in Form einer Pulsweitenmodulation erfolgen. Ebenso kann die Stromstellerfunktion sowohl bei jedem Wechselrichtertakt einem bestimmten Transistor zugeordnet sein (wie im linken Teil der FIG 3 bis 6 dargestellt) oder auch während eines Wechselrichtertaktes z.B. zwischen den Transistoren T₁ und T₄ wechseln (wie im rechten Teil der FIG 3 bis 6 dargestellt).

Alternativ wird für die Stromstellerfunktion jeweils nur einer der Transistoren T₁ bis T₄ gesperrt, wobei ebenfalls ersichtlich ist, daß jeder der Transistoren T₁ bis T₄ zeitweise die Funktion des Stromstellers wahrnimmt. Daß nur einer der Transistoren T₁ bis T₄ gesperrt wird, verringert die im Wechselrichter 3 auftretenden Verluste. Dadurch, daß jeder der Transistoren T₁ bis T₄ zeitweise die Funktion des Stromstellers wahrnimmt, werden die auftretenden Verluste gleichmäßig auf alle Transistoren T₁ bis T₄ verteilt.

Wenn beispielsweise der Stromfluß über die Transistoren T₁ und T₄ erfolgen sollte und der Transistor T₁ als augenblicklicher Stromsteller gesperrt wird, sinkt der im Zwischenkreis fließende Strom sofort auf Null ab. Dagegen kann der Primärstrom Iₚ wegen der Streuinduktivität des Hochspannungstransformators nicht abrupt auf Null absinken. In diesem Fall wird ein Stromfluß über den Transistor T₄ und die Diode D₂ aufrecht erhalten. Der durch die Primärwicklung 7 fließende Strom Iₚ wird nur durch die an den Hochspannungstransformator angeschlossene Last und die an den Halbleitern T₄ und D₂ anfallenden Durchlaßspannungen (die zusammen in der Größenordnung von ca. 2 Volt liegen) abgebaut.

Bei einem Filterdurchschlag dagegen werden alle Transistoren T₁ bis T₄ gesperrt. Wenn vor dem Durchschlag der Strom Iₚ durch die Transistoren T₁ und T₄ floß, wird nunmehr der Strom Iₚ über die Dioden D₂ und D₃ auf den Zwischenkreiskondensator 2 geführt. In diesem Fall muß allerdings zusätzlich die am Zwischenkreiskondensator 2 anliegende Zwischenkreisspannung U überwunden werden, die ca. 500 Volt beträgt. Es ergibt sich folglich ein erheblich schnellerer Stromabfall als wenn nur einer der Transistoren T₁ bzw. T₄ gesperrt worden wäre.

Analoge Verhältnisse gelten bei einem Umschalten des Wechselrichters 3, wenn statt der Transistoren T₁ und T₄ die Transistoren T₂ und T₃ leitend geschaltet werden.

Als Ergebnis der Erfindung ergibt sich ein Zwischenkreisumrichter, der auf seine absolut notwendigen Elemente reduziert ist, nämlich auf den Gleichrichter 1, den Wechselrichter 3 sowie den Zwischenkreiskondensator 2. Auch die Ansteuerung des Zwischenkreisumrichters ist einfacher als zuvor, da nur noch die vier Transistoren T₁ bis T₄ angesteuert werden müssen, aber keine zusätzlichen Elemente wie separate Stromsteller, Kurzschließer etc..

## Patentansprüche

1. Energieversorgungsverfahren für ein Elektrofilter, das über einen Zwischenkreisumrichter mit nachgeschaltetem Hochspannungstransformator mit Energie versorgt wird, wobei der Zwischenkreisumrichter eingangsseitig einen netzgespeisten Gleichrichter (1) und ausgangsseitig einen Wechselrichter (3) aufweist, wobei der Wechselrichter (3) den Hochspannungstransformator mit Wechselstrom (Iₚ) einer Ausgangsfrequenz (f₁) speist und den im Zwischenkreis fließenden Strom steuert, wobei der Wechselrichter (3) aus zwei Brückenzweigen (I, II) mit je einem plusseitigen (T₁, T₃) und einem minusseitigen (T₂, T₄) schaltbaren Halbleiterventil besteht, wobei der Hochspannungstransformator das plusseitige Halbleiterventil (T₁ bzw. T₂) eines der Brückenzweige (I bzw. II) mit dem minusseitigen Halbleiterventil (T₄ bzw. T₂) des anderen Brückenzweiges (II bzw. I) verbindet, wobei der im Zwischenkreis fließende Strom durch das Ansteuern des plusseitigen Halbleiterventils (T₁ bzw. T₃) des einen Brückenzweiges (I bzw. II) und des minusseitigen Halbleiterventils (T₄ bzw. T₂) des anderen Brückenzweiges (II bzw. I) gesteuert wird, **dadurch gekennzeichnet**, daß zum Steuern des Stromes mindestens eines der in einander zugeordneten Brückenzweigen liegenden Halbleiterventile (z.B. T₁, T₄) zusätzlich mit einer Frequenz gesperrt wird, die mindestens zehnmal so hoch wie die Ausgangsfrequenz des Wechselrichters (3) ist.

2. Energieversorgungsverfahren nach Anspruch 1, **dadurch gekennzeichnet**, daß abwechselnd nur das eine (T₁) und nur das andere (T₄) der Halbleiterventile (T₁ bis T₄) gesperrt wird.

3. Energieversorgungsverfahren nach Anspruch 1 oder 2, **dadurch gekennzeichnet**, daß bei einem Filterdurchschlag alle Halbleiterventile (T₁ bis T₄) gesperrt werden.

## Claims

1. Power supply method for an electrostatic filter, which is supplied with power by way of an indirect converter having a high-voltage transformer connected downstream, wherein the indirect converter has a mains-operated rectifier (1) on the input side and an inverter (3) on the output side, wherein the inverter (3) feeds the high-voltage transformer with alternating current (Iₚ) at an output frequency (f₁) and controls the current flowing in the intermediate circuit, wherein the inverter (3) consists of two bridge arms (I, II) each having a switched semi-conductor valve on the plus side (T₁, T₃) and on the minus side (T₂, T₄), wherein the high-voltage transformer connects the semi-conductor valve (T₁ and T₂, respectively) of one of the bridge arms (I and II, respectively) on the plus side to the semi-conductor valve (T₄ and T₂, respectively) of the other bridge arm (II and I, respectively) on the minus side, wherein the current flowing in the intermediate circuit is controlled by driving the semi-conductor valve (T₁ and T₃, respectively) of one bridge arm (I and II, respectively) on the plus side and the semi-conductor valve (T₄ and T₂, respectively) of the other bridge arm (II and I, respectively) on the minus side, characterised in that, for controlling the current, at least one of the semi-conductor valves (for example, T₁, T₄) located in mutually assigned bridge arms is additionally blocked by a frequency which is at least 10 times higher than the output frequency of the inverter (3).

2. Power supply method according to claim 1, characterised in that, alternately, of the semi-conductor valves (T₁ to T₄), only the one semi-conductor valve (T₁) and only the other semi-conductor valve (T₄) is blocked.

3. Power supply method according to claim 1 or 2, characterised in that, in the case of a filter breakdown, all of the semi-conductor valves (T₁ to T₄) are blocked.

## Revendications

1. Procédé d'alimentation en énergie d'un électrofiltre, que l'on alimente en énergie par l'intermédiaire d'un convertisseur statique de fréquence à circuit intermédiaire, en aval duquel est branché un transformateur haute tension, le convertisseur statique de fréquence à circuit intermédiaire comportant en entrée un redresseur (1) alimenté par un réseau et en sortie un onduleur (3), l'onduleur (3) alimentant le transformateur haute tension en courant (Iₚ) alternatif d'une fréquence (f₁) de sortie et commandant le courant passant dans le circuit intermédiaire, l'onduleur (3) étant constitué de deux bras (I, II) de pont comportant chacun une valve à semiconducteur du côté plus (T₁, T₃) et une valve à semiconducteur du côté moins (T₂, T₄), qui peuvent interrompre le courant, le transformateur haute tension reliant la valve (T₁ ou T₂) à semiconducteur du côté plus de l'un des bras (I ou II) de pont à la valve (T₄ ou T₂) à semiconducteur du côté moins de l'autre bras (II ou I) de pont, le courant passant dans le circuit intermédiaire étant commandé par la commande de la valve (T₁ ou T₃) à semiconducteur du côté plus de l'un des bras (I ou II) de pont et de la valve (T₄ ou T₂) à semiconducteur du côté moins de l'autre bras (II ou I) de pont, caractérisé en ce que, pour la commande du courant, on bloque en supplément, à une fréquence qui est égale à au moins dix fois la fréquence de sortie de l'onduleur (3), au moins l'une des valves (par exemple T₁, T₄) à semiconducteur se trouvant dans des bras de pont associés l'un à l'autre.

2. Procédé d'alimentation en énergie suivant la revendication 1, caractérisé en ce que l'on ne bloque en alternance que l'une (T₁) et que l'autre (T₄) des valves (T₁ à T₄) à semiconducteur.

3. Procédé d'alimentation en énergie suivant la revendication 1 ou 2,
caractérisé en ce que l'on bloque toutes les valves (T₁ à T₄) à semiconducteur en cas de claquage de filtre.
